# EUROPÄISCHE PATENTSCHRIFT

(11) **EP 4 762 355 B1**
(45) Veröffentlichungstag und Bekanntmachung des Hinweises auf die Patenterteilung: **04.11.2026**
(21) Anmeldenummer: 24759048.2
(22) Anmeldetag: 16.08.2024
(51) Int. Cl.: G01N 30/60

(54) **TRENNSÄULENMODUL FÜR EINEN CHROMATOGRAPHEN UND CHROMATOGRAPH**
SEPARATION COLUMN MODULE FOR A CHROMATOGRAPH AND CHROMATOGRAPH
MODULE DE COLONNE DE SÉPARATION DE CHROMATOGRAPHE ET CHROMATOGRAPHE

(30) Priorität: 16.08.2023 AT 506532023
(43) Veröffentlichungstag der Anmeldung: 24.06.2026
(73) Patentinhaber: TECHNISCHE UNIVERSITÄT WIEN, 1040 Wien (AT)
(72) Erfinder: KLAMPFL, Bernhard, 1040 Wien (AT); WÖHRER, Sebastian, 1040 Wien (AT); ROSENBERG, Egon Erwin, 1040 Wien (AT)
(74) Vertreter: SONN Patentanwälte GmbH & Co KG
(86) Internationale Anmeldenummer: PCT/AT2024/060312
(87) Internationale Veröffentlichungsnummer: WO 2025/035163

(56) Entgegenhaltungen:
- US-A- 3 035 383
- US-A- 3 122 014
- US-A- 3 306 347
- US-A1- 2017 234 840

## Beschreibung

Die Erfindung betrifft ein Trennsäulenmodul für einen Chromatographen, insbesondere einen Gaschromatographen, aufweisend:
eine chromatographische Trennsäule;
eine Temperiereinrichtung an der Trennsäule zur Erzeugung eines zeitlichen und/oder örtlichen Temperaturprofils entlang der Trennsäule; und
eine Ansteuerungseinheit, die mit der Temperiereinrichtung verbunden und dazu eingerichtet ist, die Temperiereinrichtung elektronisch anzusteuern, wobei die Trennsäule zumindest eine Windung und einen Aufnahmebereich innerhalb der zumindest einen Windung ausbildet, in welchem Aufnahmebereich die Ansteuerungseinheit zumindest teilweise angeordnet ist.

Des Weiteren betrifft die Erfindung einen Chromatographen, insbesondere einen Gaschromatographen, mit einem Injektor, einem Detektor und einer Auswerteeinheit.

Gaschromatographie (GC) ist eine der wichtigsten Techniken zur Trennung und Bestimmung von flüchtigen und halbflüchtigen organischen Verbindungen. Gaschromatographie umfasst typischerweise ein System, bei dem ein Analyt nach Probenauftragung eine chromatographische Trennsäule durchläuft und am Ende dieser Trennsäule in einen Detektor eintritt. Beim Durchlaufen der Trennsäule werden einzelne Komponenten des Analyten durch unterschiedlich starke Wechselwirkung mit der sogenannten stationären Phase unterschiedlich stark zurückgehalten und dadurch aufgetrennt. Um Substanzen mit unterschiedlichen Siedepunkten effizient aufzutrennen, wird oftmals ein Temperaturprogramm angewandt, d.h. die Trennsäule und die darin aufzutrennenden Substanzen werden - meist in einem mit Umluft erhitzten Säulenofen - einem zeitlich von niedriger zu hoher Temperatur ansteigenden Temperaturgradienten unterworfen.

Um Messzeiten zu verkürzen und gleichzeitig hohe Auflösungen zu erhalten, ist unter anderem die Anwendung zeitlich variierender und dabei örtlich aufgelöster Temperaturgradienten bekannt.

Ein Gaschromatograph, mit dem ein solcher Temperaturgradient erzeugbar ist, sowie ein entsprechendes Verfahren sind beispielsweise in Boeker, P. and J. Leppert, Flow Field Thermal Gradient Gas Chromatography. Analytical Chemistry, 2015. 87(17): p. 9033-9041 bzw. EP 3 123 165 A1 offenbart. Dabei wird eine direkt widerstandsbeheizte Trennkapillare aus Metall, die in einer helikalen Aussparung eines Hohlzylinders befestigt ist, durch einen Luftstrom gekühlt. Der Hohlzylinder ist mit einem porösen Material gefüllt, welches beim Durchströmen von Luft einen vom unteren zum oberen Ende des Hohlzylinders größer werdenden Druckabfall verursacht, sodass der austretende Luftstrom vom unteren zum oberen Ende der Struktur entsprechend abnimmt. Der durch einen Ventilator erzwungene Luftstrom durch den Hohlzylinder verlässt diesen dann durch den Auslass entlang des Zylindermantels und kühlt die dort befindliche Trennkapillare entsprechend des Druck- und Strömungsabfalls. Hierdurch wird ein negativer Temperaturgradient entlang der Trennsäule erzeugt. Nachteiligerweise nimmt die hier beschriebene experimentelle Anordnung sehr viel Platz in Anspruch. Zudem ist mit dem beschriebenen System nur die Realisierung isothermer Trennungen oder von Trennungen mit einem entlang der Trennstrecke monoton abnehmenden Temperaturprogramm möglich.

Contreras, J.A., et al., Dynamic thermal gradient gas chromatography. Journal of Chromatography A, 2013. 1302: p. 143-151 offenbart ebenfalls einen Gaschromatographen und ein entsprechendes Verfahren, bei denen ein Temperaturgradient entlang einer Trennkapillare erzeugt werden kann. Die Trennkapillare ist von einer Kapillare aus Nickel umgeben und in einzeln beheizbare Segmente unterteilt. Die Trennkapillare ist in eine Halteapparatur außerhalb des Gaschromatographen eingefügt, die unterhalb der Trennkapillare mehrere Kühlventilatoren aufweist. Ein Nachteil der gezeigten Vorrichtung ist, dass diese ein sehr großes Bauvolumen besitzt und daher zusätzlich zum GC ebenfalls sehr viel Platz in Anspruch nimmt. Darüber hinaus ist das System aufgrund des Einbaus der Trennkapillare in die Halteapparatur unflexibel bzw. relativ aufwendig zu warten.

Gaschromatographen sind auch aus US 3,146,616 A und WO 2022/112101 A1 bekannt.

Chromatographen und Verfahren zu deren Betrieb werden des Weiteren in US 3,122,014 A, US 3,306,347 A und US 2017/0234840 A1 beschrieben.

Aus US 3,035,383 A ist zudem ein Chromatograph bekannt, der eine gewundene Trennsäule aufweist, die entlang einer vertikalen Trägersäule geführt ist. Entlang der Trennsäule kann ein Heizelement verschoben werden, welches an einer um die Trägersäule drehbaren Trägerplatte angeordnet ist.

Im Lichte dieser Ausführungen ist es Aufgabe der vorliegenden Erfindung, die Nachteile des Standes der Technik zu lindern oder gar gänzlich zu beseitigen. Vorzugsweise ist es Aufgabe der vorliegenden Erfindung, ein Trennsäulenmodul der eingangs erwähnten Art zu realisieren, das eine geringe Baugröße aufweist und die Flexibilität des Gesamtsystems erhöht, ohne die Leistungsfähigkeit des Trennsäulenmoduls einzuschränken.

Gelöst wird diese Aufgabe durch ein Trennsäulenmodul nach Anspruch 1 und einen Chromatographen nach Anspruch 10.

Erfindungsgemäß ist bei einem Trennsäulenmodul für einen Chromatographen der eingangs erwähnten Art vorgesehen, dass die Trennsäule in mehrere Segmente unterteilt ist und jedes Segment jeweils einem eigenen Temperierelement der Temperiereinrichtung zugeordnet ist, wobei die Temperierelemente dazu eingerichtet sind, das ihnen jeweils zugeordnete Segment zu heizen und/oder kühlen. Durch die zumindest eine Windung und das Einfügen der Ansteuerungseinheit in den entstandenen Aufnahmebereich innerhalb der zumindest einen Windung wird ein kompaktes Trennsäulenmodul geschaffen, das bei einem Chromatographen bzw. bei einer Chromatographie eingesetzt und auf einfache Weise ausgetauscht werden kann. Durch die zumindest eine Windung wird die Effizienz bzw. der Wirkungsgrad der Trennsäule nicht verringert, gleichzeitig aber deren räumliche Ausdehnung im Vergleich zu einer beispielsweise geraden Trennsäule verringert. Der entstandene Platz innerhalb der zumindest einen Windung wird durch das Einfügen der Ansteuerungseinheit in den Aufnahmebereich genutzt. Außerdem kann die Stabilität des Trennsäulenmoduls verbessert werden, wenn die Trennsäule mit der Ansteuerungseinheit bzw. einem unten noch näher zu beschreibenden Trageelement der Ansteuerungseinheit verbunden wird. Das Trennsäulenmodul kann bei Chromatographen unterschiedlicher Hersteller eingesetzt werden. Die zumindest eine Windung und damit auch der Aufnahmebereich besitzen bei einem bevorzugten Ausführungsbeispiel der Erfindung einen Durchmesser zwischen 40 mm und 90 mm, insbesondere zwischen 55 mm und 70 mm. Eine einzelne Windung ist eine Kurve im Raum, die eine Kombination aus einer vorzugsweise kreisförmigen Drehung um eine Rotationsachse und einer Translation entlang ebendieser Rotationsachse beschreibt. Die Drehung um die Rotationsachse beträgt zumindest 360°. Die zumindest eine Windung umschließt die Ansteuerungseinheit daher zumindest einmal vollständig. Die zumindest eine Windung muss aber in Richtung der Rotationsachse gesehen nicht zwangsläufig eine Kreisform aufweisen, sondern kann auch beispielsweise eine im Wesentlichen elliptische, m-eckige, insbesondere dreieckige oder rechteckige, Form besitzen. Wenn die zumindest eine Windung m-eckig ist, können die Ecken abgerundet sein. Bei n Windungen, wobei n eine natürliche Zahl ist, sind entsprechend n Drehungen der Trennsäule um die Rotationsachse von zumindest 360° vorgesehen. Die Trennsäule kann beispielsweise eine Trennkapillare aus Quarzglas (Fused Silica) aufweisen, die bevorzugt durch eine Schutzkapillare, insbesondere eine Metallkapillare, geführt wird. Um die zumindest eine Windung zu erzeugen, ist die Trennsäule und, falls vorhanden, die Schutzkapillare entsprechend gebogen. Die Trennsäule kann beispielsweise einen Innendurchmesser zwischen 0,1 mm µm und 0,750 mm aufweisen. Die Filmdicke der stationären Phase innerhalb der Trennsäule kann bei einer Ausführungsform der Erfindung zwischen 0,07 µm und 0,15 µm, insbesondere im Wesentlichen 0,1 µm, betragen. Die Schutzkapillare kann bei einem Ausführungsbeispiel der Erfindung einen Innendurchmesser zwischen 0,4 mm und 5 mm, vorzugsweise zwischen 0,6 mm und 1,5 mm, noch mehr bevorzugt zwischen 0,7 mm und 1 mm aufweisen. Der Außendurchmesser der Schutzkapillare kann bei einem Ausführungsbeispiel der Erfindung zwischen 0,6 mm und 5 mm, bevorzugt zwischen 0,8 mm und 1,7 mm, noch mehr bevorzugt zwischen 0,9 mm und 1,2 mm, betragen. Die Trennsäule und, falls vorhanden, die Schutzkapillare können eine Länge zwischen 0,5 m und 10 m, vorzugsweise zwischen 1 m und 5 m oder zwischen 1 m und 3 m, beispielsweise im Wesentlichen 1,5 m, aufweisen. Die Länge der Trennsäule bzw. der Trennkapillare kann größer als die der Schutzkapillare sein, um die Verbindung zu einem Injektor bzw. zu einem Detektor zu ermöglichen. Die über die Länge der Schutzkapillare hinausreichenden Bereiche der Trennsäule können als Transferbereiche bezeichnet werden. Vorzugsweise ist eine separate Heizung für diese Transferbereiche vorgesehen. Die Trennsäule kann eine beliebige Polarität und Beschaffenheit aufweisen. Beispielsweise kann die Trennsäule eine WCOT-Dünnfilm-Kapillarsäule (WCOT = Wall Coated Open Tubular) sein, die eine Beschichtung (stationäre Phase) aus 95% Methyl- und 5% Phenylsiloxan aufweist. Die Trennsäule besitzt ein erstes Ende zur Verbindung mit einem Injektor und ein zweites Ende zur Verbindung mit einem Detektor eines Chromatographen. Die Ansteuerungseinheit weist eine elektrische Schaltung zum Ansteuern der Temperiereinrichtung auf. Die elektrische Schaltung kann beispielsweise Schalter, wie zum Beispiel Relais oder Transistoren, insbesondere MOSFETs, aufweisen, die mit der Temperiereinrichtung elektrisch verbunden sind. Neben den Schaltern kann die Schaltung auch weitere elektrische oder elektronische Bauteile, wie zum Beispiel Widerstände, Spulen, Dioden oder Kondensatoren, aufweisen. Des Weiteren kann die Ansteuerungseinheit einen Mikroprozessor oder Mikrocontroller aufweisen, in dem ein Steuer- und/oder Regelungsprogramm zur Steuerung bzw. Regelung der Temperiereinrichtung implementiert ist. Der Mikroprozessor oder der Mikrocontroller kann über eine Schnittstelle, beispielsweise eine BUS-Schnittstelle, mit einer Prozesssteuerungseinrichtung eines Chromatographen verbunden sein. Über diese Schnittstelle kann der Chromatograph die Ansteuerungseinheit aktivieren bzw. dazu anregen, ein Temperaturprofil zu erzeugen. In diesem Fall ist ein Steuer- und/oder Regelungsprogramm zur Steuerung bzw. Regelung der Temperiereinrichtung in der Prozesssteuerungseinrichtung des Chromatographen implementiert. Die Temperiereinrichtung kann beispielsweise ein oder mehrere voneinander unabhängige Heiz- und/oder Kühlelemente, wie beispielsweise Peltierelemente oder metallische oder keramische Widerstandsheizelemente, aufweisen. Mit der Temperiereinrichtung kann ein zeitliches und/oder örtliches Temperaturprofil entlang der Trennsäule erzeugt werden. Beispielsweise kann eine Temperaturwelle entlang der Trennsäule erzeugt werden. Es ist aber auch möglich, einen statischen Temperaturgradienten oder einen im Wesentlichen konstanten Temperaturverlauf entlang der Trennsäule zu erzeugen. Zur raschen und effizienten Erzeugung des Temperaturprofils kann zusätzlich noch eine Lüftung vorgesehen sein.

Bei einer bevorzugten Ausführungsform der Erfindung ist vorgesehen, dass die Trennsäule mehrere Windungen entlang einer Rotationsachse ausbildet und sich der Aufnahmebereich entlang dieser Rotationsachse erstreckt. Bei einer beispielhaften Ausgestaltung der Erfindung sind zumindest drei, zumindest vier, zumindest fünf, zumindest sechs, zumindest sieben oder zumindest acht Windungen vorgesehen. Die Windungen können regelmäßig voneinander beabstandet sein. Mit anderen Worten können die Windungen alle dieselbe Ganghöhe besitzen. Wenn mehrere Windungen vorgesehen sind, bildet die Trennsäule bevorzugt eine Helix aus. Der Aufnahmebereich, in welchen die Ansteuerungseinheit zumindest teilweise aufgenommen ist, liegt innerhalb dieser Windungen. Wie bereits erwähnt, führen n Windungen zu einer Drehung der Trennsäule um die Rotationsachse von zumindest n*360°, wobei die Drehungen durch die Windungen selbst nicht kreisförmig sein müssen, aber bevorzugt kreisförmig sind.

Für eine vereinfachte Handhabung ist es günstig, wenn die Ansteuerungseinheit zumindest teilweise, vorzugsweise vollständig, an einem Trageelement, insbesondere an einer Leiterplatte, angeordnet ist. Insbesondere die elektrische Schaltung der Ansteuerungseinheit kann an dem Trageelement angeordnet sein. Das Trageelement ist zumindest teilweise in dem Aufnahmebereich angeordnet und somit zumindest teilweise von der zumindest einen Windung der Trennsäule umgeben. Vorzugsweise ist das Trageelement im Wesentlichen länglich ausgebildet. Vorzugsweise ist das Trageelement im Wesentlichen parallel zu einer Längsachse des Aufnahmebereichs und/oder im Wesentlichen parallel zu der Rotationsachse der Windungen angeordnet. Vorzugsweise weist das Trageelement eine Längsachse auf, die im Wesentlichen parallel zu einer Längsachse des Aufnahmebereichs und/oder im Wesentlichen parallel zu der Rotationsachse der Windungen angeordnet ist. Wenn die Ansteuerungseinheit einen Mikroprozessor oder einen Mikrocontroller wie oben beschrieben aufweist, kann dieser bei einer Ausführungsform der Erfindung ebenfalls an dem Trageelement befestigt sein und einen Teil der an dem Trageelement angeordneten Schaltung bilden. Alternativ kann der Mikroprozessor oder Mikrocontroller separat von dem Trageelement vorgesehen sein, d.h. nicht am Trageelement angeordnet sein. Bei dieser Ausführungsform kann der Mikroprozessor oder Mikrocontroller mit Drähten oder einem Kabel mit der Schaltung der Ansteuerungseinheit am Trageelement verbunden sein, um die Temperiereinrichtung zu steuern und/oder regeln. Elektrische Verbindungen innerhalb der elektrischen Schaltung der Ansteuerungseinheit am Trageelement und gegebenenfalls mit dem Mikroprozessor bzw. dem Mikrocontroller können durch Drähte oder, insbesondere im Falle einer Leiterplatte als Trageelement, durch Leiterbahnen realisiert werden. Das Trageelement ist bevorzugt im Wesentlichen rechteckförmig ausgebildet. Die maximale Breite des Trageelements ist vorzugsweise geringer als ein Durchmesser entlang des Querschnitts des Aufnahmebereichs. Die Länge des Trageelements kann jedoch größer sein als die Länge des Aufnahmebereichs, sodass das Trageelement nach oben und/oder unten über den Aufnahmebereich hinausragt. Es kann aber auch vorgesehen sein, dass die maximale Länge des Trageelements kürzer ist als die Länge des Aufnahmebereichs.

Hinsichtlich einer sicheren Handhabung ist es günstig, wenn das Trageelement über zumindest ein Halteelement mit der Trennsäule verbunden ist. Das zumindest eine Halteelement kann das Trageelement und die Trennsäule zueinander in Position halten. Das Halteelement kann beispielsweise als Halteklammer, als Haltefeder oder als Rastelement ausgebildet sein. Wenn eine Schutzkapillare vorgesehen ist, kann das zumindest eine Halteelement mit dieser verbunden sein. Das zumindest eine Halteelement kann auch als Abstandhalter zwischen der Trennsäule bzw. der Schutzkapillare und dem Trageelement fungieren. Bevorzugt sind mehrere insbesondere gleichartige Haltelemente vorgesehen. Das zumindest eine Halteelement kann an einem Seitenrand des Trageelements angeordnet sein. Wenn mehrere Halteelemente vorgesehen sind, sind diese bevorzugt entlang eines oder mehrerer Seitenränder regelmäßig voneinander beabstandet angeordnet. Bei einer Ausführungsform der Erfindung kann das zumindest eine Halteelement durch einen Teil eines Temperierelements, insbesondere einen Teil eines Heizdrahtes eines Temperierelements, gebildet sein. Das zumindest eine Halteelement kann, insbesondere wenn es durch einen Teil des Temperierelements gebildet ist, zum Beispiel mit einer Klemme an dem Trageelement verbunden sein, welche vorzugsweise elektrisch mit einem Schalter der Ansteuerungseinheit verbunden ist.

Erfindungsgemäß ist vorgesehen, dass die Trennsäule in mehrere, vorzugsweise zumindest fünf oder zumindest zehn, Segmente unterteilt ist und jedes Segment jeweils einem eigenen Temperierelement der Temperiereinrichtung zugeordnet ist, wobei die Temperierelemente dazu eingerichtet sind, das ihnen jeweils zugeordnete Segment zu heizen und/oder zu kühlen. Die Segmente schließen bevorzugt aneinander an. Die Segmente können aber auch voneinander beabstandet sein. Bei einer Ausführungsform ist die gesamte Trennsäule in Segmente unterteilt. Als Temperierelement kann beispielsweise ein Peltierelement oder ein Heizdraht vorgesehen sein. Die Temperierelemente können das ihnen zugeordnete Segment zumindest teilweise oder vollständig umgeben. Ein Segment der Trennsäule kann beispielsweise eine Länge zwischen 50 mm und 150 mm aufweisen. Wenn als Temperierelement ein Heizdraht vorgesehen ist, kann dieser das Segment mehrmals umwickeln. Bei einer Ausführungsform der Erfindung können die Temperierelemente über die Halteelemente, die bevorzugt elektrisch isoliert sind, elektrisch mit der Ansteuerungseinheit, insbesondere mit jeweils einem Schalter der Ansteuerungseinheit, verbunden sein. Die Halteelemente können auch durch einen Teil der Temperierelemente, insbesondere ein Heizdraht, gebildet sein. Die Halteelemente können mit Klemmen an dem Trageelement, die elektrisch mit den Schaltern verbunden sein können, elektrisch verbunden sein.

Um jedes Temperierelement individuell ansteuern zu können, ist es vorteilhaft, wenn jedes Temperierelement mit jeweils einem Schalter, vorzugsweise einen Transistor, insbesondere einen MOSFET, der Ansteuerungseinheit verbunden ist. Die Schalter bilden einen Teil der elektrischen Schaltung der Ansteuerungseinheit. Über die Schalter können die jeweils zugeordneten Temperierelemente angesteuert und dadurch das dem jeweiligen Temperierelement zugeordnete Segment geheizt oder gekühlt werden. Durch Ansteuerung der Schalter, insbesondere Aktivierung oder Deaktivierung der Schalter - je nach Art der Schalter und deren elektrische Verschaltung - kann eine elektrische Spannung, insbesondere eine Versorgungsspannung, an das mit dem jeweiligen Schalter verbundene Temperierelement angelegt werden.

Bei einer bevorzugten Ausführungsform der Erfindung ist vorgesehen, dass die Temperierelemente jeweils einen elektrisch leitfähigen Heizdraht, der um die Trennsäule angeordnet, insbesondere gewickelt, ist, aufweisen. Wenn die Trennsäule von einer Schutzkapillare, insbesondere einer Metallkapillare, umgeben ist, können die jeweiligen Heizdrähte um die Schutzkapillare gewickelt sein. Als Heizdraht kann unter anderem eine Kupfer-Nickellegierung, beispielsweise CuNi44, verwendet werden. Die Dimensionen des Heizdrahtes hängen von der spezifischen Anwendung ab. Bei einer Ausführungsform der Erfindung besitzt der Heizdraht eines Temperierelements einen Querschnittsdurchmesser von im Wesentlichen 0,4 mm bis 0,8 mm, insbesondere 0,6 mm, und eine Länge von 400 mm bis 600 mm, insbesondere 500 mm. Die Heizdrähte können bei einem Ausführungsbeispiel der Erfindung ein Segment der Trennsäule auf eine Temperatur von 100 °C bis 350 °C, vorzugsweise von 100 °C bis 300 °C, erwärmen.

Eine besonders vorteilhafte Variante der Erfindung sieht vor, dass die Ansteuerungseinheit dazu eingerichtet sein kann, die Temperierelemente mittels einer Pulsweitenmodulation derart anzusteuern, dass das zeitliche und/oder örtliche Temperaturprofil entlang der Trennsäule erzeugbar ist. Insbesondere, wenn als Temperierelemente Heizdrähte verwendet werden, kann dadurch auf besonders einfache Weise die umgesetzte Wärme kontrolliert werden. Die Pulsweitenmodulation (PWM) kann mithilfe des bereits beschriebenen Mikroprozessors oder Mikrocontrollers erzeugt werden. Zu diesem Zweck kann der Mikroprozessor oder Mikrocontroller die oben erwähnten Schalter ansteuern.

Als Temperaturprofil können beispielsweise
eine oder mehrere wandernde Temperaturwellen entlang der Trennsäule;
ein örtlich aufgelöster und vorzugsweise zeitlich veränderbarer Temperaturgradient entlang der Trennsäule;
eine im Wesentlichen konstante Temperaturverteilung entlang der Trennsäule; oder
eine im Wesentlichen konstante Temperaturverteilung entlang der Trennsäule, die zeitlich veränderbar ist,
vorgesehen sein.

Eine Temperaturwelle besitzt ein Maximum sowie einen ansteigenden und einen abfallenden Temperaturverlauf. Das Maximum der Temperaturwelle kann beispielsweise zwischen 50 °C und 250 °C liegen. Die Geschwindigkeit der Temperaturwelle kann zwischen 0,03 und 0,3 m/s, betragen. Eine wandernde Temperaturwelle kann durch entsprechende zeitlich verändernde Ansteuerung der Temperierelemente erzeugt werden. Die Vorteile einer wandernden Temperaturwelle liegen in folgenden zwei Punkten:
Erstens ist der Gradient einer wandernden Temperaturwelle typischerweise steiler als ein örtlich aufgelöster Temperaturgradient entlang der gesamten Trennsäule. Dies führt zu schmäleren Peaks und damit zu einer besseren Auflösung.

Zweitens wird die Temperaturwelle bevorzugt nicht nur durch ein einzelnes Heiz- und Kühlsystem hergestellt, sondern durch mehrere Temperierelemente. Dadurch können Geschwindigkeit und Steilheit der Welle durch Heizleistung und Änderung der Heizintervalle der einzelnen Segmente präzise gesteuert werden. Beim Durchlaufen einer Substanz durch eine Trennsäule, die einen negativen Temperaturgradienten aufweist, findet eine Fokussierung des Substanzpeaks statt. Diese Fokussierung ist durch eine Beschleunigung an der wärmeren Peakrückseite und ein Abbremsen an der kühleren Peakvorderseite bedingt. Wenn der Gradient in Form einer wandernden Temperaturwelle vorliegt, können sich die Substanzen, die sich entlang dieses Gradienten auftrennen, auf gewissen Temperaturniveaus, sogenannten Equilibriumstemperaturen, im Wesentlichen fixiert durch die Trennsäule bewegen. Der Verbleib auf einem gewissen Punkt, der sich auf der wandernden Welle befindet, ist dadurch bedingt, dass eine Beschleunigung durch die vor dem Peak kühlere Temperatur und eine Abbremsung durch die hinter dem Peak wärmere Temperatur stattfinden. Wird die Geschwindigkeit der Temperaturwelle entsprechend gewählt, kann das Eluieren von Substanzen beschleunigt werden. Durch die beschriebenen Effekte werden einerseits Auflösung bzw. Auftrennung des Analyten und andererseits Messdauern optimiert.

Die Temperaturwelle kann vom ersten Ende der Trennsäule hin zum zweiten Ende der Trennsäule oder in umgekehrte Richtung (vom zweiten Ende der Trennsäule hin zum ersten Ende der Trennsäule) wandern. Ein örtlich aufgelöster Temperaturgradient besitzt einen vorzugsweise monotonen Anstieg zu einem globalen Maximum hin, welches beispielsweise bei 250 °C liegen kann, und bleibt zumindest örtlich fixiert, d.h. der Temperaturgradient bewegt sich im Unterschied zu einer Temperaturwelle nicht entlang der Trennsäule. Der Temperaturgradient kann auch mehrstufig sein und unterschiedliche starke Anstiege aufweisen. Der Temperaturgradient kann bei einer Ausführungsform während des Trennvorgangs zeitlich veränderbar sein. Insbesondere kann die Steigung des Temperaturgradienten angepasst werden. Bei einer bevorzugten Ausführungsform der Erfindung erstreckt sich der Temperaturgradient entlang der gesamten Trennsäule. Der Gradient kann positiv oder negativ sein, das heißt vom ersten Ende der Trennsäule zum zweiten Ende der Trennsäule hin ansteigen oder abfallen. Eine im Wesentlichen konstante Temperaturverteilung entlang der Trennsäule weist keinen Temperaturgradienten auf. Letzteres kann auch als isothermes Temperaturprofil bezeichnet werden. Die Temperatur des Temperaturprofils kann beispielsweise bis zu 250°C betragen. Die im Wesentlichen konstante Temperaturverteilung entlang der Trennsäule erstreckt sich vorzugsweise im Wesentlichen entlang der gesamten Trennsäule. Wenn die im Wesentlichen konstante Temperaturverteilung entlang der Trennsäule während des Trennvorgangs auch zeitlich konstant ist, erfolgt eine isotherme Trennung. Die im Wesentlichen konstante Temperaturverteilung entlang der Trennsäule kann bei einer Ausführungsform der Erfindung während des Trennvorgangs zeitlich veränderbar sein. Somit kann die Höhe der Temperatur der konstanten Temperaturverteilung entlang der Trennsäule zeitlich verändert werden. Dies entspricht einer temperaturprogrammierten Trennung, wie sie von konventionellen Gaschromatographen zumeist verwendet wird. Die Temperatur des zeitlich veränderbaren Temperaturprofils kann beispielsweise bis zu 250°C betragen. Eine temperaturprogrammierte Trennung weist wie ein isothermes Temperatursystem eine einheitliche Temperatur entlang der Trennsäule aus, die Temperatur ist also keine Funktion des Ortes. Anders als bei einer isothermen Trennung wird die Temperatur der Trennsäule, zumeist durch Beheizung dieser in einem Luftbad im Säulenofen des GCs, während eines Trennvorgangs verändert bzw. erhöht. Dadurch können Analyten, die Substanzen unterschiedlicher Flüchtigkeiten enthalten, zeiteffizient aufgetrennt werden.

Die eingangs erwähnte Aufgabe wird auch durch einen Chromatographen, insbesondere Gaschromatograph, mit einem Injektor, einem Detektor und einer optionalen Auswerteeinheit gelöst, bei dem ein Trennsäulenmodul der oben beschriebenen Art eingesetzt wird. Bei einem Gaschromatographen wird eine mobile Phase und eine Trennsäule mit geeigneter stationärer Phase verwendet. Als mobile Phase kann ein Inertgas wie beispielsweise Stickstoff oder Helium oder Wasserstoff eingesetzt werden. Als stationäre Phase kann beispielsweise 5% Phenyl und 95% Methylpolysiloxan verwendet werden. Beispiele für einen Analyt sind Kohlenwasserstoffe aus der petrochemischen Industrie oder Degradationsprodukte von Elektrolyten aus Lithium-Ionen-Akkumulatoren. Als Injektor wird bevorzugt ein Split/Splitless-Injektor verwendet. Der Detektor kann beispielsweise ein FID-Detektor sein. Der Druck innerhalb der Trennsäule beträgt vorzugsweise zwischen 50 kPa und 400 kPa.

Offenbart wird auch ein Chromatographieverfahren, bei dem eine Chromatographie, insbesondere eine Gaschromatopraphie, mithilfe des beschriebenen Chromatographen durchgeführt wird. Dabei wird eine Probe in die Trennsäule via den Injektor eingeführt, in einzelne chemische Verbindungen aufgetrennt und mittels des Detektors analysiert.

Die Erfindung wird nachfolgend anhand eines Ausführungsbeispiels näher beschrieben, auf das sie jedoch nicht beschränkt sein soll.

Es zeigen:
Fig. 1 ein schematisch dargestelltes Trennsäulenmodul in einer Gesamtansicht;
Fig. 2 ein schematisch dargestelltes Trennsäulenmodul in einer Ansicht von vorne;
Fig. 3 ein schematisch dargestelltes Trennsäulenmodul in einer seitlichen Ansicht;
Fig. 4 ein schematisch dargestelltes Trennsäulenmodul in einer Ansicht von oben;
Fig. 5 eine schematisch dargestelltes Trennsäulenmodul in einer Detailansicht;
Fig. 6 schematisch dargestellte Temperierelemente an einer Trennsäule in elektrischer Verschaltung;
Fig. 7 schematisch dargestellte Temperierelemente an einer geraden Trennsäule; und
Fig. 8 Temperaturprofile entlang einer Trennsäule;
Fig. 9 ein Blockschaltbild eines Chromatographen;
Fig. 10 ein beispielhaftes Chromatogramm.

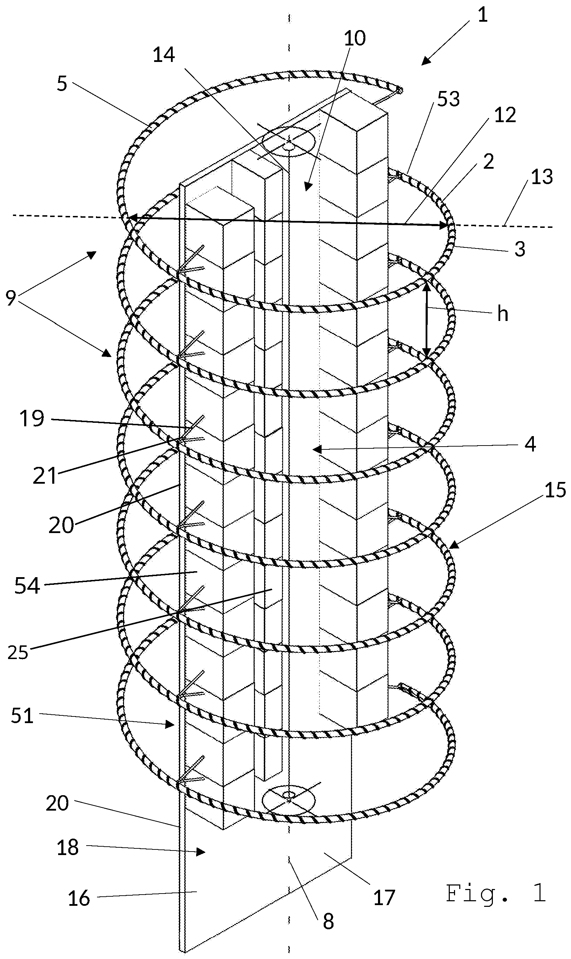

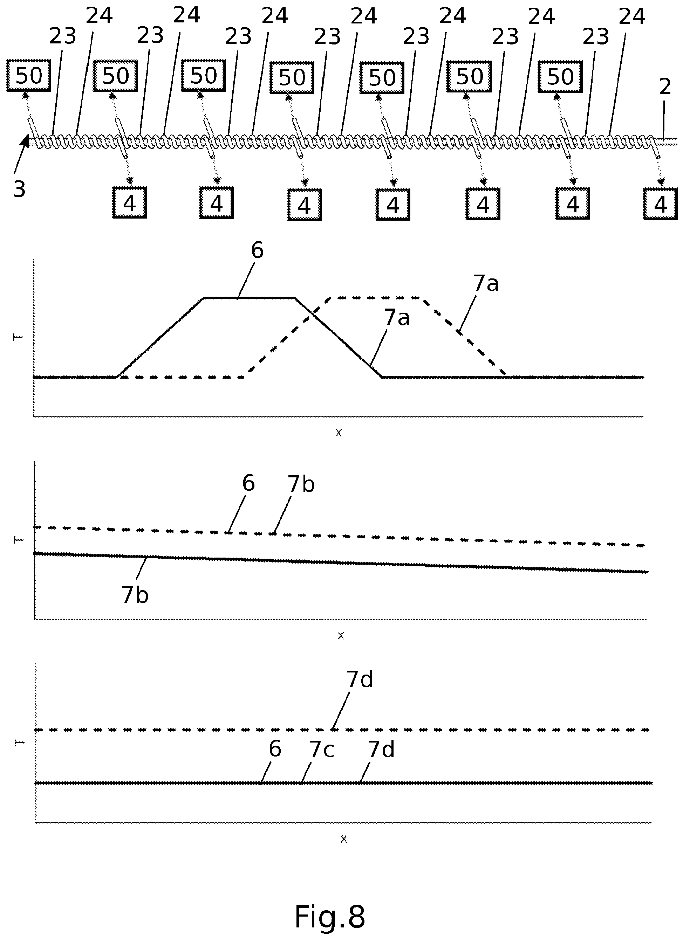

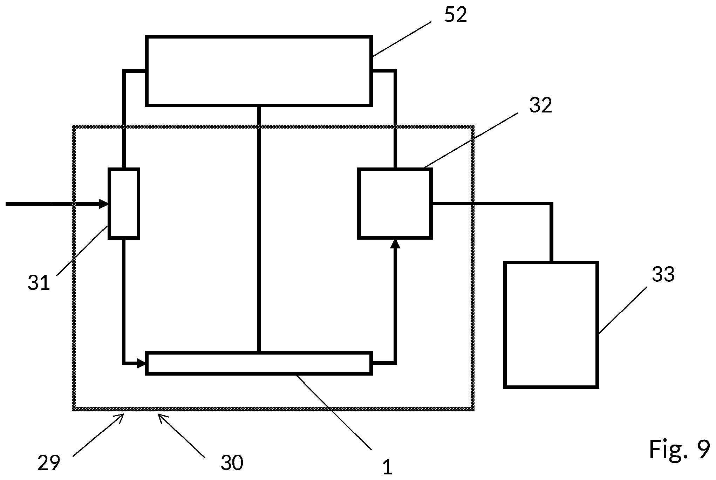

Fig. 1 zeigt ein Trennsäulenmodul 1, das bei einem Chromatographen 29 (siehe Fig. 9) eingesetzt werden kann. Das Trennsäulenmodul 1 weist eine chromatographische Trennsäule 2 innerhalb einer Schutzkapillare 5 aus Metall, eine Temperiereinrichtung 3 an der Trennsäule 2 und eine Ansteuerungseinheit 4 zur Ansteuerung der Temperiereinrichtung 3 auf. Die Schutzkapillare 5 ist zur elektrischen Isolation von einer Isolationschicht 53, vorzugsweise einer Polyimidschicht, umgeben. Die Schutzkapillare 5, innerhalb der die Trennsäule 2 angeordnet ist, besitzt einen Innendurchmesser von ca. 0,8 mm. Die Trennsäule 2 selbst weist einen Innendurchmesser von 0,1 mm auf. Mithilfe der Temperiereinrichtung 3 kann ein zeitliches und/oder örtliches Temperaturprofil 6, wie etwa eine wandernde Temperaturwelle 7a (siehe Fig. 8), entlang der Trennsäule 2 erzeugt werden. Entlang der Trennsäule 2 bedeutet in diesem Zusammenhang auch entlang der Schutzkapillare 5. Die Temperiereinrichtung 3 wird von der Ansteuerungseinheit 4 gemäß einer Sollvorgabe, die von einer Prozesssteuerungseinrichtung 52 des Chromatographen 29 (siehe Fig. 9) vorgegeben werden kann, entsprechend angesteuert.

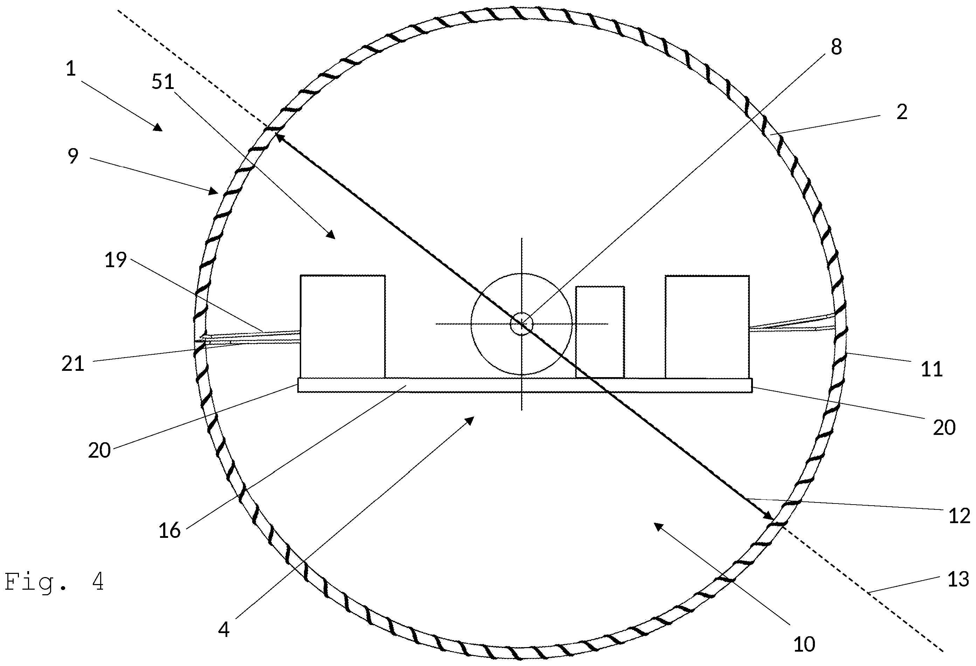

Wie in Fig. 1 ersichtlich, weist die Trennsäule 2 entlang einer imaginären Rotationsachse 8 mehrere Windungen 9 auf, sodass zwischen den Windungen 9 ein im Wesentlichen zylinderförmiger Aufnahmebereich 10 entsteht, in den die Ansteuerungseinheit 4 aufgenommen ist. Der Umfang 11 des Aufnahmebereichs 10 (siehe Fig. 4) wird durch die Windungen 9 begrenzt. Die Breite 12 des Aufnahmebereichs 10 entspricht somit dem Abstand zwischen einer Windung 9 entlang einer rechtwinkelig zur Rotationsachse 8 angeordneten imaginären Querachse 13. Die Höhe 14 des Aufnahmebereichs 10 entspricht der auf die Rotationsachse 8 normalprojizierte Längserstreckung der gesamten Windungen 9 entlang der Rotationsachse 8. Die Windungen 9 beschreiben eine Kurve, die einer Kombination aus einer kreisförmigen Drehung um die Rotationsachse 8 und einer Translation entlang der Rotationsachse 8 entspricht. Der Abstand zwischen jeweils zweier übereinander angeordneter, d.h. benachbarter, Windungen 9 - die Ganghöhe h - ist bei allen benachbarten Windungen 9 bevorzugt im Wesentlichen gleich. Die Form der Trennsäule 2 stellt somit eine Helix 15 dar.

In der gezeigten Ausführungsform ist die Ansteuerungseinheit 4 an einem Trageelement 16 in Form einer Leiterplatte 17 angeordnet. Die Leiterplatte 17 besitzt eine im Wesentlichen rechteckige Grundstruktur und ist in dem Aufnahmebereich 10 innerhalb der Windungen 9 angeordnet. Mit anderen Worten umgeben die Windungen 9 das Trageelement 16. Durch diese Anordnung wird das Bauvolumen des Trennsäulenmoduls 1 im Vergleich zum Stand der Technik deutlich reduziert. Ein Teil des Trageelements 16 ragt dabei im unteren Bereich 18 über den Aufnahmebereich 10 hinaus und kann zur Handhabung des Trennsäulenmoduls 1 genutzt werden.

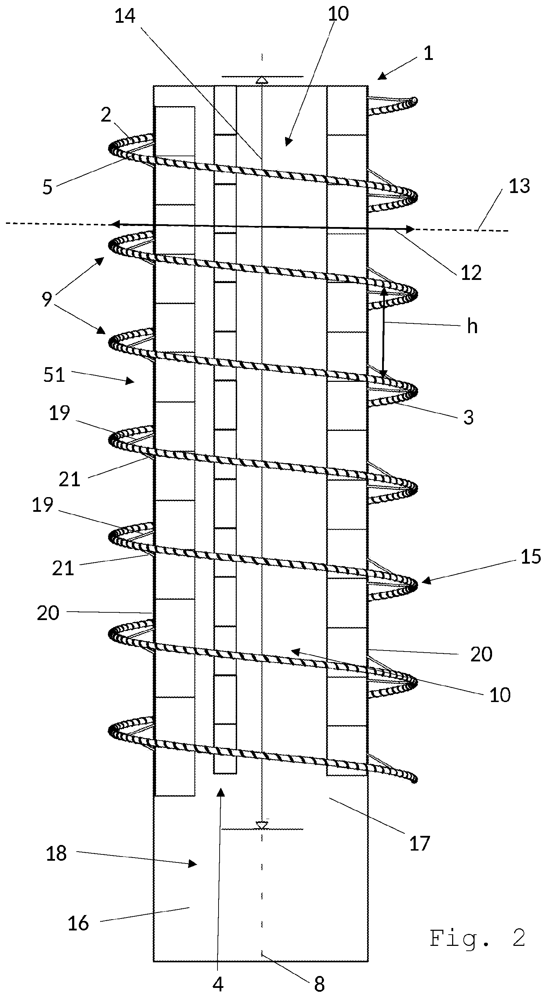

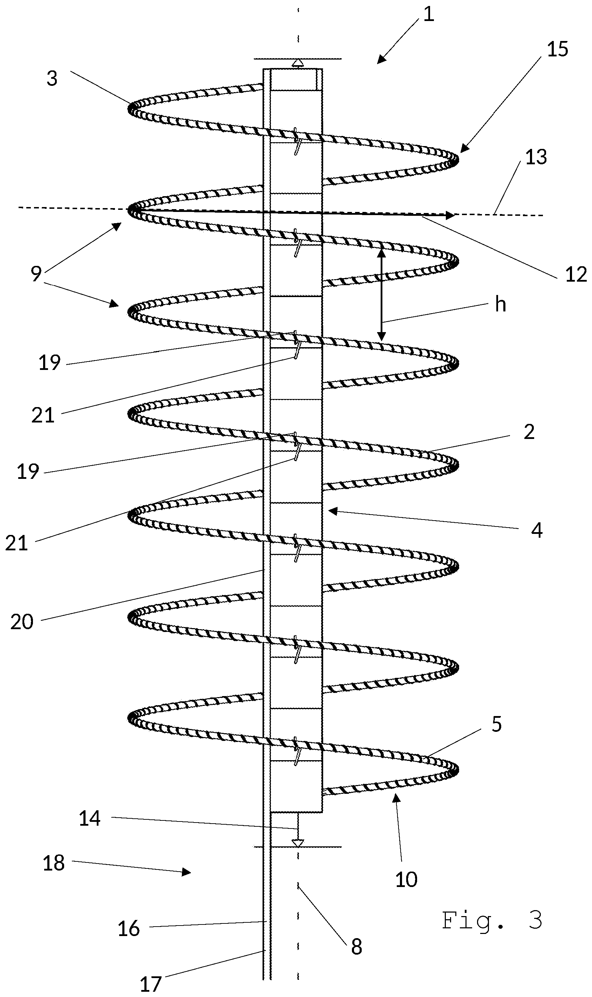

Fig. 2 und Fig. 3 zeigen das Trennsäulenmodul 1 in einer vorderen und einer seitlichen Ansicht. In Fig. 2 und Fig. 3 ist erkennbar, dass das Trageelement 16 über mehrere Halteelemente 19 mit der Trennsäule 2 verbunden ist. Die Halteelemente 19 sind an den Seitenrändern 20 des Trageelements 16 angeordnet. Die Halteelemente 19 sind beispielsweise als Halteklammern 21 ausgebildet. Fig. 4 zeigt das Trennsäulenmodul 1 in einer Ansicht von oben, in der die Halteelemente 19 ebenfalls erkennbar sind.

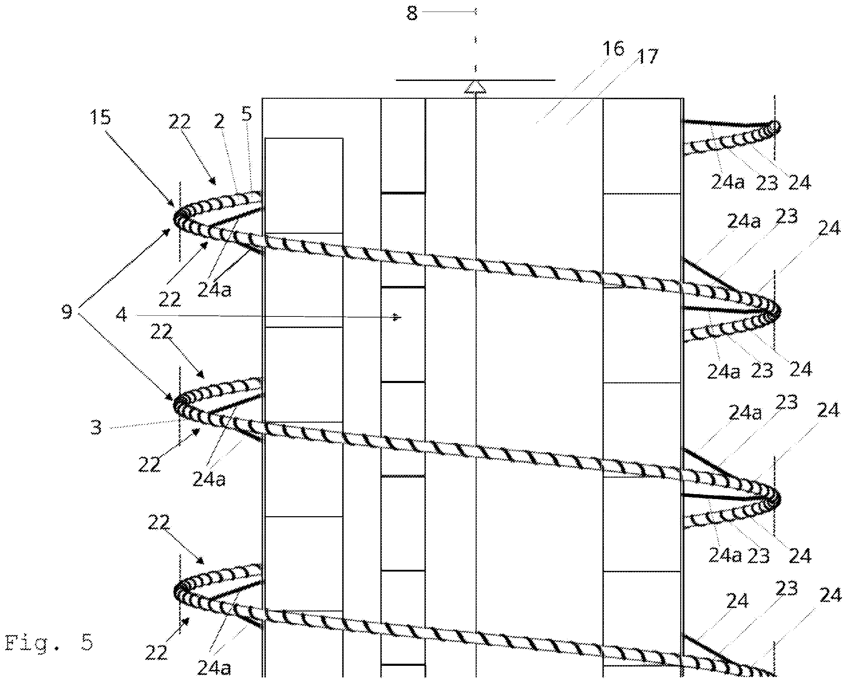

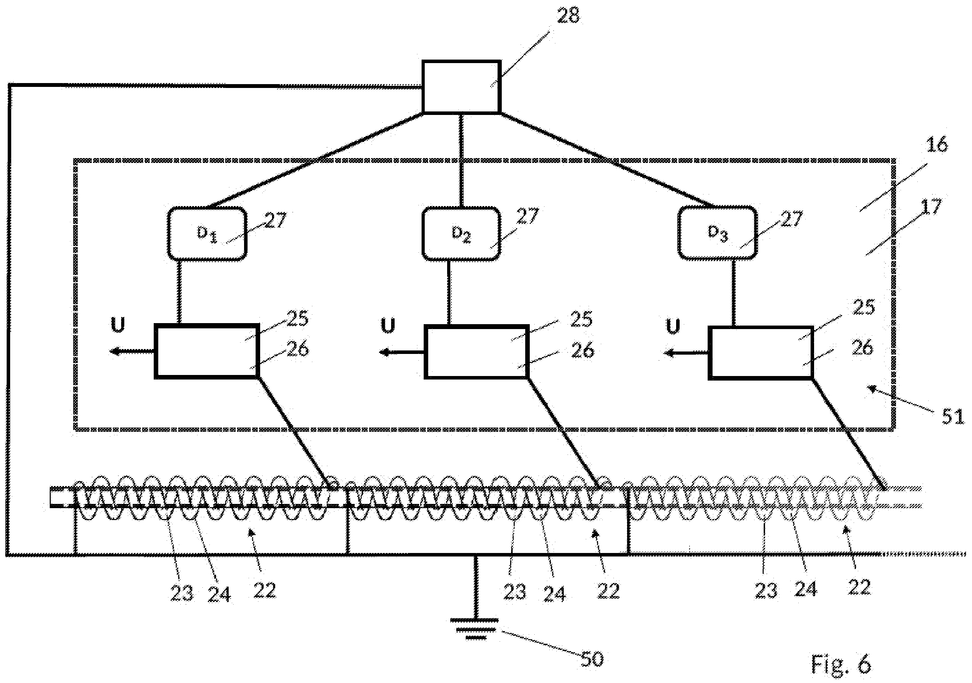

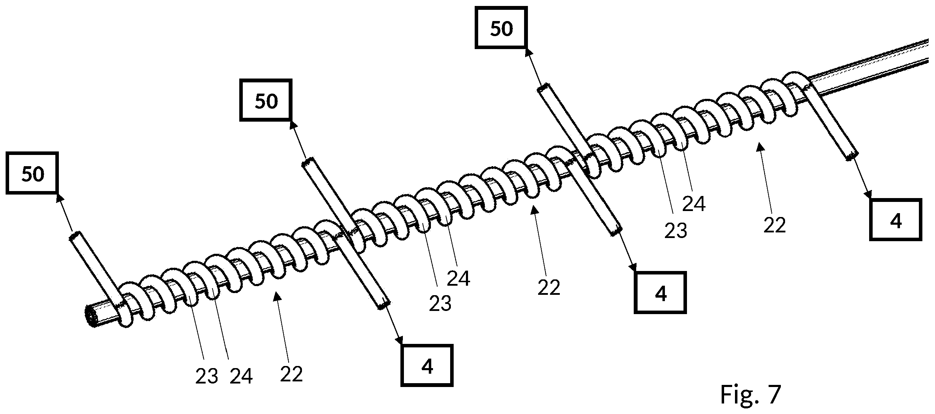

Fig. 5 zeigt ein schematisch dargestelltes Trennsäulenmodul in einer Detailansicht. Die Trennsäule 2 bzw. die umgebende Schutzkapillare 5 ist in mehrere Segmente 22 unterteilt, die jeweils mit einem Temperierelement 23 in Form eines Heizdrahts 24 umwickelt sind. In Fig. 5 werden die Segmente 22 durch die gestrichelten Linien begrenzt. In der gezeigten Darstellung sind die Heizdrähte 24 direkt um die Schutzkapillare 5 gewickelt, welche von der Isolationsschicht 53 umgeben ist. Jedem Segment 22 ist somit ein eigenes Temperierelement 23 zugeordnet. Mithilfe der Heizdrähte 24, deren Enden mit der Ansteuerungseinheit 4 bzw. mit der elektrischen Masse 50 verbunden sind (siehe auch Fig. 6), können die jeweils zugeordneten Segmente 22 beheizt werden. Fig. 7 zeigt dies in einer vergrößerten Darstellung, allerdings zum Zwecke der besseren Übersicht mit einer geraden Trennsäule 2. Bei einer Ausführungsform der Erfindung sind vierzehn Segmente 22 vorgesehen, die jeweils eine Länge von ca. 10 cm aufweisen. Als Heizdraht 24 kann zum Beispiel eine CuNi44-Legierung mit einem Querschnittsdurchmesser von im Wesentlichen 0,6 mm und einer Länge ca. 500 mm verwendet werden. Ein solcher Heizdraht 24 hat einen spezifischen Widerstand von im Wesentlichen 1,73 Ω/m. Die Enden 24a der Heizdrähte 24 können beispielsweise an oder in den Halteelementen 19 zu den jeweiligen, unten noch näher zu beschreibenden Schaltern 25 geführt sein. Es ist aber auch möglich, dass die Halteelemente 19 durch die Enden 24a der Heizdrähte 24 gebildet sind oder die Heizdrähte 24 über die Halteelemente 19 mit den Schaltern 25 elektrisch verbunden sind. Die Halteelemente 19 bzw. Enden 24a der Heizdrähte 24 können beispielsweise mit Klemmen 54, insbesondere Printklemmen, an dem Trageelement 16 verbunden sein, welche Klemmen 54 mit den Schaltern 25 elektrisch verbunden sind. Auf diese Weise kann jedes Temperierelement 23 elektrisch mit einem noch näher zu beschreibenden Schalter 25 verbunden werden.

Fig. 6 zeigt eine Verschaltung der Temperierelemente 23. Jedes Temperierelement 23 ist mit einem elektrischen Schalter 25 der Ansteuerungseinheit 4 und der elektrischen Masse 50 verbunden. Die Schalter 25 bilden eine Schaltung 51 der Ansteuerungseinheit 4. Die Schalter 25 sind in der gezeigten Ausführungsform als MOSFETs 26 ausgebildet und werden durch Anlegen einer Steuerspannung an das Gate aktiviert. Durch Ansteuerung der Schalter 25 können die Heizdrähte 24, die den Temperierelementen 23 entsprechen, mit elektrischer Spannung U beaufschlagt werden, sodass sich die Heizdrähte 24 aufgrund ohmscher Verluste gemäß dem Gesetz P = U²/R erwärmen. P bedeutet dabei die elektrische Leistung, U die aufgeschaltete Spannung und R der Widerstand des jeweiligen Heizdrahtes 24. Im gezeigten Ausführungsbeispiel schalten die Schalter 25 durch deren Aktivierung, d.h. Anlegen einer Steuerspannung an das Gate, die im Wesentlichen Spannung U an den jeweiligen Heizdraht 24 (normally-open-Beschaltung). Es ist aber auch eine normally-closed-Beschaltung mit entsprechenden Schaltern denkbar. Um die Heizleistung zu regulieren, ist bei der gezeigten Ausführungsform vorgesehen, dass die Schalter 25 über eine PWM 27 (PWM = Pulsweitenmodulation) der Steuerspannung angesteuert werden. Die PWM kann mithilfe eines Mikrocontrollers 28 erzeugt werden, der bei einer alternativen Ausführungsform am Trageelement 16 angeordnet und einen Teil der Schaltung 51 der Ansteuerungseinheit 4 am Trageelement darstellt. Durch Wahl der Duty-Cycle D₁, D₂, D₃ der PWM kann die Heizleistung eines Heizdrahtes eingestellt werden.

In dem Mikrocontroller 28 kann ein Steuer- und/oder Regelungsprogramm zur Steuerung bzw. Regelung der Temperiereinrichtung 3 implementiert sein. Mithilfe des Steuer- und/oder Regelungsprogramm kann ein zeitliches und/oder örtliches Temperaturprofil 6 entlang der Trennsäule erzeugt werden (siehe Fig. 8). Beispielsweise können eine oder mehrere wandernde Temperaturwellen 7a erzeugt werden, um den Trennungsprozess innerhalb der Trennsäule 2 zu begünstigen. Es ist aber auch möglich, einen Temperaturgradienten 7b entlang der Trennsäule 2 zu erzeugen, der örtlich fixiert ist. Der dargestellte Temperaturgradient 7b erstreckt sich vorzugsweise im Wesentlichen entlang der gesamten Trennsäule **2.** Der Temperaturgradient 7b kann während des Trennvorgangs zeitlich veränderbar sein, wie durch die gestrichelte Linie angedeutet. In Fig. 8 ist zudem eine im Wesentlichen konstante Temperaturverteilung 7c dargestellt, die sich im Wesentlichen entlang der gesamten Trennsäule 2 erstreckt (isotherme Trennung). Die im Wesentlichen konstante Temperaturverteilung entlang der Trennsäule 2 kann während des Trennvorgangs zeitlich veränderbar sein (temperaturprogrammiertes Trennprogramm), wie ebenfalls durch die gestrichelte Linie und die Bezugsziffer 7d angedeutet. T bezeichnet dabei eine Temperatur und x eine Ortskoordinate entlang der Trennsäule **2.** Zum Zwecke der besseren Übersicht ist die Trennsäule 2 im oberen Bereich von Fig. 8 gerade dargestellt, wobei diese erfindungsgemäß jedoch gewunden ist.

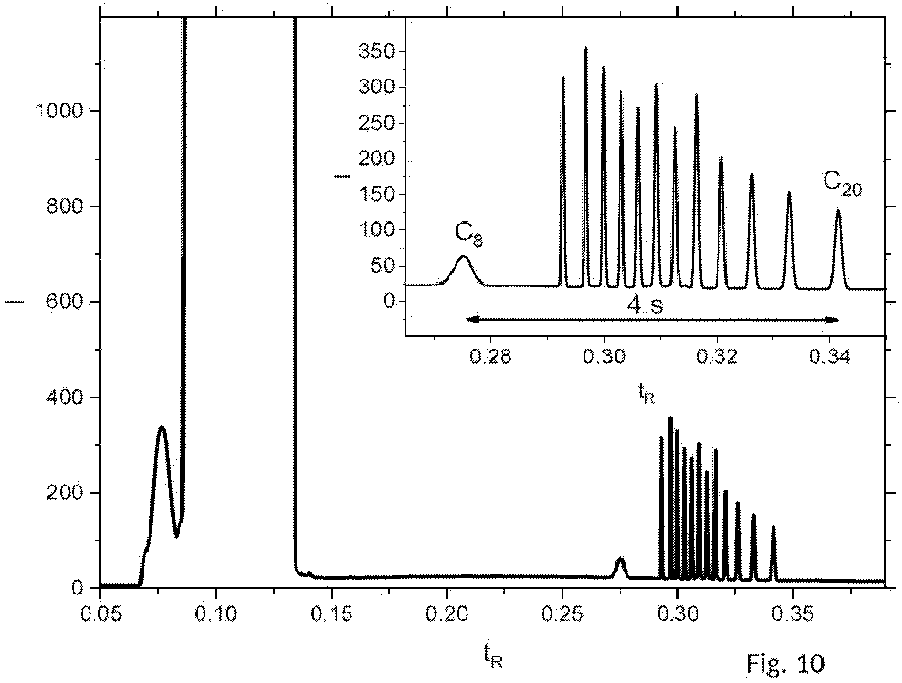

Fig. 9 zeigt einen Chromatographen 29, insbesondere einen Gaschromatographen 30, mit einem Injektor 31, einem Detektor 32, einer Auswerteeinheit 33 und einem Trennsäulenmodul 1. Nachfolgend wird eine Chromatographie beschrieben, bei dem das erfindungsgemäße Trennsäulenmodul 1 eingesetzt wurde. Dabei wurde eine Basislinientrennung von C8-C20 in etwa 5 s erreicht, siehe das Chromatogramm gemäß Fig. 10. Die Abszisse des Diagramms bildet die Retentionszeit t_{R} in Minuten ab. Die Ordinate beschreibt die Intensität I. Für diese Trennung wurde eine Lösung der n-Alkane von C8-C20 (jeweils ~40 mg/l in n-Hexan, bezogen von Sigma-Aldrich, Art. Nr. Supelco 04070) - verwendet, die in flüssiger Form mit einem Volumen von 1 µl und einem Split von 200:1 per Autosampler auf die Trennsäule 2 aufgetragen wurde. Der Injektor 31 (250 °C), Trägergasstrom (Helium, 0,5 ml/min) und Detektor 32 (FID) wurden dabei durch einen Agilent 6890N Gaschromatographen gesteuert. Die ersten und letzten ca. 0,5 m der Trennsäule 2 dienten dabei als Transferkapillaren, die zum Injektor 31 respektive Detektor 32 des Systems führten und separat auf 140 °C beheizt wurden.

## Patentansprüche

1. Trennsäulenmodul (1) für einen Chromatographen, insbesondere einen Gaschromatographen, aufweisend:
eine chromatographische Trennsäule (2);
eine Temperiereinrichtung (3) an der Trennsäule (2) zur Erzeugung eines zeitlichen und/oder örtlichen Temperaturprofils (6) entlang der Trennsäule (2); und
eine Ansteuerungseinheit (4), die mit der Temperiereinrichtung (3) verbunden und dazu ausgebildet ist, die Temperiereinrichtung (3) elektronisch anzusteuern, _wobei die Trennsäule (2) zumindest eine Windung (9) und einen Aufnahmebereich (10) innerhalb der zumindest einen Windung (9) ausbildet, in welchem Aufnahmebereich (10) die Ansteuerungseinheit (4) zumindest teilweise angeordnet ist, **dadurch gekennzeichnet, dass** die Trennsäule (2) in mehrere Segmente (22) unterteilt ist und jedes Segment (22) jeweils einem eigenen Temperierelement (23) der Temperiereinrichtung (3) zugeordnet ist, wobei die Temperierelemente (23) dazu eingerichtet sind, das ihnen jeweils zugeordnete Segment (22) zu heizen und/oder kühlen.

2. Trennsäulenmodul (1) nach Anspruch 1, **dadurch gekennzeichnet, dass** die Trennsäule (2) mehrere Windungen (9) entlang einer Rotationsachse (8) ausbildet und sich der Aufnahmebereich (10) entlang dieser Rotationsachse (8) erstreckt.

3. Trennsäulenmodul (1) nach Anspruch 1 oder 2, **dadurch gekennzeichnet, dass** die Ansteuerungseinheit (4) zumindest teilweise, vorzugsweise vollständig, an einem Trageelement (16), insbesondere an einer Leiterplatte (17), angeordnet ist.

4. Trennsäulenmodul (1) nach Anspruch 3, **dadurch gekennzeichnet, dass** das Trageelement (16) über zumindest ein Halteelement (19) mit der Trennsäule (2) verbunden ist.

5. Trennsäulenmodul (1) nach einem der Ansprüche 1 bis 4, **dadurch gekennzeichnet, dass** die Trennsäule (2) in zumindest fünf oder zumindest zehn Segmente (22) unterteilt ist.

6. Trennsäulenmodul (1) nach Anspruch 5, dass jedes Temperierelement (23) mit jeweils einem Schalter (25), vorzugsweise einen Transistor, insbesondere einen MOSFET (26), der Ansteuerungseinheit (4) verbunden ist.

7. Trennsäulenmodul (1) nach Anspruch 5 oder 6, **dadurch gekennzeichnet, dass** die Temperierelemente (23) jeweils einen elektrisch leitfähigen Heizdraht (24), der um die Trennsäule (2) angeordnet, insbesondere gewickelt, ist, aufweisen.

8. Trennsäulenmodul (1) nach einem der Ansprüche 5 bis 7, **dadurch gekennzeichnet, dass** die Ansteuerungseinheit (4) dazu eingerichtet ist, die Temperierelemente (23) mittels einer Pulsweitenmodulation derart anzusteuern, dass das zeitliche und/oder örtliche Temperaturprofil (6) entlang der Trennsäule (2) erzeugbar ist.

9. Trennsäulenmodul (1) nach einem der Ansprüche 1 bis 8, **dadurch gekennzeichnet, dass** als Temperaturprofil (6)
eine oder mehrere wandernde Temperaturwellen (7a) entlang der Trennsäule (2);
ein örtlich aufgelöster und vorzugsweise zeitlich veränderbarer Temperaturgradient (7b) entlang der Trennsäule;
eine im Wesentlichen konstante Temperaturverteilung (7c) entlang der Trennsäule (2); oder
eine im Wesentlichen konstante Temperaturverteilung (7d) entlang der Trennsäule, die zeitlich veränderbar ist, vorgesehen ist.

10. Chromatograph (29), insbesondere Gaschromatograph (30), mit einem Injektor (31), einem Detektor (32) und einer optionalen Auswerteeinheit (33), **dadurch gekennzeichnet, dass** bei dem Chromatograph (29) ein Trennsäulenmodul (1) gemäß einem der Ansprüche 1 bis 9 eingesetzt wird.

## Claims

1. Separation column module (1) for a chromatograph, in particular a gas chromatograph, comprising:
a chromatographic separation column (2);
a temperature control device (3) on the separation column (2) for generating a temporal and/or spatial temperature profile (6) along the separation column (2); and
a control unit (4) which is connected to the temperature control device (3) and configured to electronically control the temperature control device (3), wherein the separation column (2) forms at least one turn (9) and a receiving area (10) within the at least one turn (9), in which receiving area (10) the control unit (4) is at least partially arranged, **characterized in that** the separation column (2) is divided into a plurality of segments (22) and each segment (22) is assigned to its own respective temperature control element (23) of the temperature control device (3), wherein the temperature control elements (23) are configured to heat and/or cool the respective segment (22) assigned to them.

2. Separation column module (1) according to claim 1, **characterized in that** the separation column (2) forms a plurality of turns (9) along an axis of rotation (8) and the receiving area (10) extends along this axis of rotation (8).

3. Separation column module (1) according to claim 1 or 2, **characterized in that** the control unit (4) is at least partially, preferably completely, arranged on a support element (16), in particular on a printed circuit board (17).

4. Separation column module (1) according to claim 3, **characterized in that** the support element (16) is connected to the separation column (2) via at least one holding element (19).

5. Separation column module (1) according to any one of claims 1 to 4, **characterized in that** the separation column (2) is divided into at least five or at least ten segments (22).

6. Separation column module (1) according to claim 5, **characterized in that** each temperature control element (23) is connected to a respective switch (25), preferably a transistor, in particular a MOSFET (26), of the control unit (4).

7. Separation column module (1) according to claim 5 or 6, **characterized in that** the temperature control elements (23) each comprise an electrically conductive heating wire (24) which is arranged, in particular wound, around the separation column (2).

8. Separation column module (1) according to any one of claims 5 to 7, **characterized in that** the control unit (4) is configured to control the temperature control elements (23) by means of pulse-width modulation such that the temporal and/or spatial temperature profile (6) can be generated along the separation column (2).

9. Separation column module (1) according to any one of claims 1 to 8, **characterized in that**, as the temperature profile (6),
one or more traveling temperature waves (7a) along the separation column (2);
a spatially resolved and preferably temporally variable temperature gradient (7b) along the separation column;
a substantially constant temperature distribution (7c) along the separation column (2); or
a substantially constant temperature distribution (7d) along the separation column which is temporally variable, is provided.

10. Chromatograph (29), in particular gas chromatograph (30), comprising an injector (31), a detector (32) and an optional evaluation unit (33), **characterized in that** a separation column module (1) according to any one of claims 1 to 9 is used in the chromatograph (29).

## Revendications

1. Module de colonne de séparation (1) pour un chromatographe, en particulier un chromatographe en phase gazeuse, comprenant :
une colonne de séparation chromatographique (2) ;
un dispositif de régulation de température (3) sur la colonne de séparation (2) pour générer un profil de température temporel et/ou spatial (6) le long de la colonne de séparation (2) ; et
une unité de commande (4) qui est reliée au dispositif de régulation de température (3) et configurée pour commander électroniquement le dispositif de régulation de température (3), la colonne de séparation (2) formant au moins une spire (9) et une zone de réception (10) à l'intérieur de l'au moins une spire (9), zone de réception (10) dans laquelle l'unité de commande (4) est au moins partiellement disposée, **caractérisé en ce que** la colonne de séparation (2) est divisée en plusieurs segments (22) et chaque segment (22) est associé à son propre élément de régulation de température (23) respectif du dispositif de régulation de température (3), les éléments de régulation de température (23) étant configurés pour chauffer et/ou refroidir le segment (22) qui leur est respectivement associé.

2. Module de colonne de séparation (1) selon la revendication 1, **caractérisé en ce que** la colonne de séparation (2) forme une pluralité de spires (9) le long d'un axe de rotation (8) et la zone de réception (10) s'étend le long de cet axe de rotation (8).

3. Module de colonne de séparation (1) selon la revendication 1 ou 2, **caractérisé en ce que** l'unité de commande (4) est au moins partiellement, de préférence totalement, disposée sur un élément de support (16), en particulier sur une carte de circuit imprimé (17).

4. Module de colonne de séparation (1) selon la revendication 3, **caractérisé en ce que** l'élément de support (16) est relié à la colonne de séparation (2) par l'intermédiaire d'au moins un élément de maintien (19).

5. Module de colonne de séparation (1) selon l'une quelconque des revendications 1 à 4, **caractérisé en ce que** la colonne de séparation (2) est divisée en au moins cinq ou au moins dix segments (22).

6. Module de colonne de séparation (1) selon la revendication 5, **caractérisé en ce que** chaque élément de régulation de température (23) est relié à un commutateur (25) respectif, de préférence un transistor, en particulier un MOSFET (26), de l'unité de commande (4).

7. Module de colonne de séparation (1) selon la revendication 5 ou 6, **caractérisé en ce que** les éléments de régulation de température (23) comprennent chacun un fil chauffant électroconducteur (24) disposé, en particulier enroulé, autour de la colonne de séparation (2).

8. Module de colonne de séparation (1) selon l'une quelconque des revendications 5 à 7, **caractérisé en ce que** l'unité de commande (4) est configurée pour commander les éléments de régulation de température (23) au moyen d'une modulation de largeur d'impulsion de telle sorte que le profil de température temporel et/ou spatial (6) peut être généré le long de la colonne de séparation (2).

9. Module de colonne de séparation (1) selon l'une quelconque des revendications 1 à 8, **caractérisé en ce qu'**il est prévu, en tant que profil de température (6) :
une ou plusieurs ondes de température progressives (7a) le long de la colonne de séparation (2) ;
un gradient de température spatialement résolu et de préférence variable dans le temps (7b) le long de la colonne de séparation ;
une distribution de température sensiblement constante (7c) le long de la colonne de séparation (2) ; ou
une distribution de température sensiblement constante (7d) le long de la colonne de séparation, qui est variable dans le temps.

10. Chromatographe (29), en particulier chromatographe en phase gazeuse (30), comprenant un injecteur (31), un détecteur (32) et une unité d'évaluation facultative (33), **caractérisé en ce qu'**un module de colonne de séparation (1) selon l'une quelconque des revendications 1 à 9 est utilisé dans le chromatographe (29).
